# EUROPÄISCHE PATENTANMELDUNG

(11) **EP 1 279 903 A2**
(43) Veröffentlichungstag der Anmeldung: **29.01.2003**
(21) Anmeldenummer: 02004462.4
(22) Anmeldetag: 27.02.2002
(51) Int. Cl.: F24H 1/43

(54) **Wärmetauscher für ein Gasheizgerät, insbesondere für ein Brennwertgerät**

(30) Priorität: 26.07.2001 DE 10136441
(71) Anmelder: ROBERT BOSCH GMBH, 70442 Stuttgart (DE)
(72) Erfinder: Kehl, Albin, Dr., 73098 Rechberghausen (DE); Schmuker, Franz, 73117 Wangen (DE); Schaefer, Albrecht, 70771 Leinfelden-Echterdingen (DE); Klosok, Jan, 71336 Waiblingen (DE)

(57) **Zusammenfassung**

Die Erfindung betrifft einen Wärmetauscher für ein Gasheizgerät, insbesondere ein Brennwertgerät, mit einer von der zu erwärmenden Flüssigkeit durchfließenden Rohrwendel, bei dem das wärmeführende Abgas des Gasheizgerätes dem Innenraum der Rohrwendel zuführbar ist und bei dem das Abgas aus dem Innenraum der Rohrwendel zwischen den Windungen der Rohrwendel hindurch unter Wärmeabgabe an diese abführbar ist. Ist nach der Erfindung vorgesehen, dass die Rohrwendel aus mehreren, koaxial in einander angeordneten Teil-Wendeln besteht, die für die zu erwärmende Flüssigkeit in Reihe geschaltet sind, dann wird bei kompakter Bauweise ein optimaler Wärmewirkungsgrad erreicht und eine unerwünschte Aufheizung des den Wärmetauscher aufnehmenden Gehäuses vermieden.

## Beschreibung

Die Erfindung betrifft einen Wärmetauscher für ein Gasheizgerät, insbesondere ein Brennwertgerät, mit einer von der zu erwärmenden Flüssigkeit durchfließenden Rohrwendel, bei dem das wärmeführende Abgas des Gasheizgerätes dem Innenraum der Rohrwendel zuführbar ist und bei dem das Abgas aus dem Innenraum der Rohrwendel zwischen den Windungen der Rohrwendel hindurch unter Wärmeabgabe an diese abführbar ist.

### Stand der Technik

Gasheizgeräte mit einer derartigen Rohrwendel sind in unterschiedlicher Bauweise bekannt, wie die EP 0 678 186 B1, die EP 0 758 731 B1 und die EP 0 845 640 A1 zeigen. Bei diesen Wärmetauschern ist im oberen Teil der Rohrwendel ein zylindrischer Brenner eingesetzt. Dabei wird die Rohrwendel von den Abgasen vorwiegend in Achsrichtung der Rohrwendel durchströmt. Dieses Konzept hat den Nachteil, dass das Gehäuse, von dem der Wärmetauscher umschlossen wird, vom heißen Abgas berührt wird, daher sehr viel Wärme aufnimmt und heiß wird, insbesondere dann, wenn der Wärmetauscher eine hohe Wärmeleistung aufweist.

Zudem ist in der Regel unterhalb des Brenners ein zylindrischer Verdrängungskörper erforderlich, der die heißen Abgase zur Umströmung der Rohrwendel zwingt. Dies bedeutet unnötige Kosten und unerwünschten Raumbedarf. Der Wärmetauscher kann daher nicht als kompakte Baueinheit gebaut werden. Dabei kann die Rohrwendel auch aus Ovalrohren gewickelt sein oder mehrere Segmente umfassen, die einfach und mehrfach radial durchströmt werden, wie die WO 94/16272 zeigt. Auch diese Lösung hat den Nachteil, dass heiße Abgase, die nur einmal mit Wärmetauscherflächen in Kontakt gekommen sind, das ummantelnde Gehäuse berühren und aufheizen.

Es sind auch im Aluminium-Sandguss-Verfahren hergestellte Wärmetauscher bekannt, die jedoch sehr teuer in der Herstellung sind. Dasselbe gilt für Wärmetauscher aus metallischen Lamellen und Rohrbündel-Wärmetauscher, wobei stets eine einzige Rohrwendel mit einer zylindrischen Aufnahme für einen Brenner gebildet wird.

Es ist Aufgabe der Erfindung, einen Wärmetauscher der eingangs erwähnten Art zu schaffen, der als kompakte Baueinheit preisgünstig herstellbar ist, die Wärmeenergie der Abgase optimal ausnutzt und eine unerwünschte Aufheizung des den Wärmetauscher aufnehmenden Gehäuses vermeidet.

### Vorteile der Erfindung

Diese Aufgabe wird nach der Erfindung dadurch gelöst, dass die Rohrwendel aus mehreren, koaxial ineinander angeordneten Teil-Wendeln besteht, die für die zu erwärmende Flüssigkeit in Reihe geschaltet sind.

Das Abgas durchströmt nacheinander die koaxial ineinander angeordneten Teil-Wendeln und gibt nacheinander an die Außenflächen der Windungen der Teil-Wendeln Wärme ab, so dass die in den Teilwendeln strömende Flüssigkeit, z.B. Heizungswasser oder Brauchwasser, erwärmt wird. Nach dem Passieren der äußersten Teil-Wendel ist das Abgas so weit abgekühlt, dass eine unerwünschte Aufheizung des Gehäuses nicht mehr auftritt.

Die radiale Durchströmung der Teil-Wendeln ist für die Abgase dadurch sichergestellt, dass die Teil-Wendeln radial einen Abstand zueinander aufweisen und dass die Windungen der Teil-Wendeln im Abstand zueinander gewickelt oder durch Abstandselemente auf Abstand gehalten sind. Die Abgase treten daher im Wesentlichen radial durch die Teil-Wendeln.

Die konstruktive Ausgestaltung kann dabei so ausgeführt sein, dass die Teil-Wendeln als einstückige Wickeleinheit gewickelt sind, wobei die Wickelrichtung abwechselnd von unten nach oben und von oben nach unten gerichtet ist. Dieser Wicklungssinn wird auch dann eingehalten, wenn die Teil-Wendeln einzeln hergestellt und miteinander zu einer Baueinheit zusammengeschlossen werden. Auf diese Weise lässt sich das vorteilhafte Prinzip des Gegenstromes für das Abgas und die Flüssigkeit ideal realisieren.

Damit die Teil-Wendeln koaxial ineinander angeordnet werden können, ist vorgesehen, dass die Wickeleinheit zylindrische Teil-Wendeln mit unterschiedlichen Durchmessern umfasst.

Zur Verbesserung der Wärmeübertragung ist vorgesehen, dass er in einem Gehäuse untergebracht ist, das die Teil-Wendeln allseitig umschließt, dass im Innenraum der innersten Teil-Wendel ein Brenner angeordnet ist und dass das Gehäuse über und unter dem Brenner wärmeisoliert ist. Die Abgase müssen daher radial aus dem Innenraum der innersten Teil-Wendel abgeführt werden.

Nach einer weiteren Ausgestaltung ist vorgesehen, dass das Gehäuse über der äußersten Teil-Wendel mit einem ringförmigen Abgassammelraum versehen ist, um das Abgas gesammelt einem Abgassystem zuführen zu können.

Aufgrund der günstigen thermischen Verhältnisse kann das Gehäuse teilweise oder vollständig aus Kunststoff hergestellt werden.

Das am Wärmetauscher anfallende Kondensat wird dadurch abgeführt, dass das Gehäuse unter der äußersten Teil-Wendel als ringförmige Kondensat-Auffangwanne ausgebildet ist.

Für die Ausgestaltung der Teil-Wendeln und die Wahl der Materialien gibt es eine Vielzahl von Anpassungsmöglichkeiten. So können die Teil-Wendeln aus Rundoder Ovalrohr aus wärmeleitendem Material hergestellt werden.

Diese Rohre können selbst als Rippenrohr oder Wellrohr ausgebildet sein, um zwischen den Windungen den erforderlichen Abstand einzuhalten.

Es kann zur Herstellung der Teil-Wendeln oder den einstückig hintereinander geschalteten Teil-Wendeln ein Rohr verwendet werden, bei dem im Innenhochdruck-Verfahren ausgeprägte Distanz-Noppen angebracht worden sind.

DieTeil-Wendeln müssen nicht unbedingt zylindrisch ausgebildet sein, sie können auch axial konisch ausgeführt sein.

Die Anzahl der Windungen in den Teil-Wendeln kann unterschiedlich groß sein.

Die Abstände der Windungen in den Teil-Wendeln kann ebenfalls verschieden sein. Dasselbe gilt für die Abstände innerhalb der Teil-Wendel.

Auf diese Weise kann die Strömungsgeschwindigkeit der Abgase beim Passieren der Teil-Wendeln verändert und beeinflusst werden. Dabei ist vorzugsweise so verfahren, dass die Abstände zwischen den Windungen der Teil-Wendeln von der innersten Teil-Wendel zu der äußersten Teil-Wendel hin abnehmen.

Die Beeinflussung der Strömungsgeschwindigkeit und der Wärmeübertragung kann auch dadurch erfolgen, dass die innerste Teil-Wendel aus Glattrohr und die äußeren Teil-Wendeln aus Rippenrohren gewickelt sind, wobei die Rippenzahl der verwendeten Rippenrohre in den Teil-Wendeln nach außen hin zunimmt.

Schließlich kann noch vorgesehen sein, dass der Durchmesser der Rohre in den Teil-Wendeln unterschiedlich groß ist und vorzugsweise von innen nach außen abnimmt, um den Wärmetauscher optimal an die Strömungsverhältnisse der Abgase und der Flüssigkeit in den Teil-Wendeln anzupassen.

### Zeichnung

Die Erfindung wird anhand eines in der Zeichnung dargestellten Ausführungsbeispiels näher erläutert. Es zeigen:
- Fig. 1: im schematischen Schnitt den Aufbau eines Gasheizgerätes mit einem Wärmetauscher nach der Erfindung und
- Fig. 2: einen einstückigen Wärmetauscher mit drei koaxial ineinander gewickelten Teil-Wendeln.

### Ausführungsbeispiel

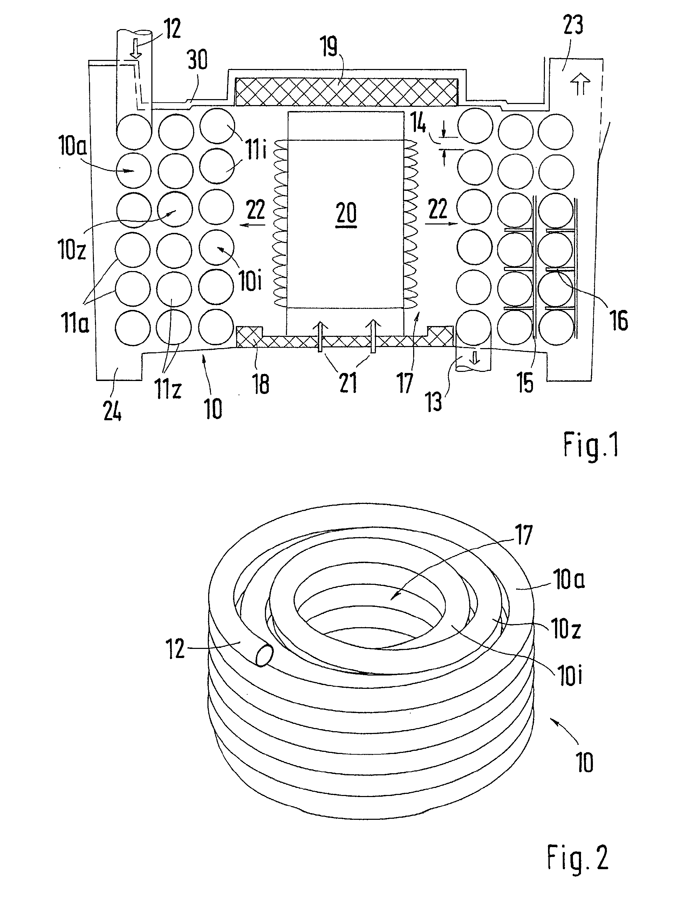

Wie die Fig. 1 zeigt, wird der Brenner 20 des Gasheizgerätes von dem zylindrischen Innenraum 17 einer innersten Teil-Wendel 10i umschlossen. Das den Wärmetauscher 10 aufnehmende Gehäuse 30 ist über und unter dem Brenner 20 mit wärmeisolierenden Platten 18 und 19 versehen. Wie die Pfeile 21 zeigen, wird dem Brenner 20 der Brennstoff von unten zugeführt. Über die Zündung und Verbrennung des Brennstoffes und die Steuerung des Brenners 20 braucht hier nicht näher eingegangen zu werden, da dies in bekannter Weise durchgeführt werden kann und für den Aufbau des erfindungsgemäßen Wärmetausches 10 nicht von entscheidener Bedeutung ist.

Im Ausführungsbeispiel umschließen die Teil-Wendeln 10i, 10z und 10a den Brenner 20. Wie die Pfeile 22 zeigen, druchströmen die Abgase diese drei Teil-Wendeln 10i, 10z und 10a radial nacheinander und geben ihren Wärmeinhalt nacheinander mehr und mehr an diese ab. Dazu ist es erforderlich, dass die Windungen 11i, 11z und 11a der Teil-Wendeln 10i, 10z und 10a einen definierten Abstand 14 zueinander einnehmen. Wenn erforderlich, können Distanzelemente 16 an einen Halter 15 zwischen die Windungen eingebracht werden, um die Abstände sicher einzuhalten. Dabei genügt es, wenn dies an drei um 120° versetzten Umfangsstellen der Teil-Wendeln 10i, 10z und 10a vorgenommen wird.

Wie mit 12 angedeutet, wird der Flüssigkeits-Rücklauf der äußersten Teil-Wendel 10a oben zugeführt und der Flüssigkeits-Vorlauf unten an der innersten Teil-Wendel 10i entnommen, wie mit dem Bezugszeichen 13 angedeutet ist.

Die Abgase sind nach dem Passieren der äußersten Teil-Wendel 10a praktisch voll abgekühlt, so dass ein Kontakt mit dem umschließenden Gehäuse 30 zu keiner unerwünschten Aufheizung des Gehäuses und zu keinem Wärmeverlust kommt.

Die aufsteigenden Abgase werden von einer ringförmigen Abgassammelkammer aufgenommen, die über der äußersten Teil-Wendel 10a vom Gehäuse 30 gebilet ist. In nicht dargestellter Weise können die Abgase daraus über einen Anschlussstutzen oder dergleichen einem Abgassystem zugeführt werden.

Unterhalb der äußersten Teil-Wendel 10a bildet das Gehäuse 30 eine ringförmige Kondensat-Auffangwanne 24, aus der das Kondensat über einen Ablaufstutzen abgeleitet werden kann.

Es ist zu bemerken, dass vorzugsweise eine ungerade Anzahl von Teil-Wendeln koaxial ineinander verschachtelt werden, in denen die Flüssigkeit abwechselnd von oben nach unten und von unten nach oben fließt, so dass zumindest beim letzten Wärmeaustausch zwischen Abgas und Flüssigkeit im Gegenstromprinzip gearbeitet wird. Das Gegenstrom-Prinzip ist in jedem Fall größtenteils eingehalten, weil die äußerste Wendel sehr wenig Wärme aufnimmt und die Abgase, die durch diese Wendel treten, schon weitgehend abgekühlt sind, d.h. die Temperatur der äußerste Teilwendel ist nahe der Rücklauftemperatur der Flüssigkeit.

Die einfachste konstruktive Ausgestaltung des Wärmetauschers 10 ergibt sich in der einstückigen Wicklung der Teil-Wendeln 10i, 10z und 10a nach Fig. 2, die vorzugsweise mit der innersten Teil-Wendel 10i von innen und von unten nach oben beginnt. Daran schließt sich mit größerem Durchmesser die Zwischen-Teil-Wendel 10z von oben nach unten gewickelt an. Schließlich beendet die äußerste Teil-Wendel 10a von unten nach oben gewickelt die Herstellung des Wärmetauschers mit drei zylindrischen Teil-Wendeln.

Dieser Aufbau des Wärmetauschers bietet eine Vielzahl von Anpassungsmöglichkeiten. Als Parameter dazu können dienen die Anzahl der Windungen in den Teil-Wendeln 10i, 10z und 10a, der Abstand der Windungen, der Durchmesser und Querschnitt der für die Teil-Wendeln 10i, 10z und 10a verwendeten Rohre, das Rohrmaterial, die Ausbildung der Rohre als Rippenrohre oder Wellrohre, die Anzahl der Rohrrippen und der gegenseitige axiale Versatz der Windungen in den Teil-Wendeln 10i, 10z und 10a.

## Patentansprüche

1. Wärmetauscher für ein Gasheizgerät, insbesondere ein Brennwertgerät, mit einer von der zu erwärmenden Flüssigkeit durchfließenden Rohrwendel, bei dem das wärmeführende Abgas des Gasheizgerätes dem Innenraum der Rohrwendel zuführbar ist und bei dem das Abgas aus dem Innenraum der Rohrwendel zwischen den Windungen der Rohrwendel hindurch unter Wärmeabgabe an diese abführbar ist,
**dadurch gekennzeichnet,**
**dass** die Rohrwendel (10) aus mehreren, koaxial ineinander angeordneten Teil-Wendeln (10i, 10z, 10a) besteht, die für die zu erwärmende Flüssigkeit in Reihe geschaltet sind.

2. Wärmetauscher nach Anspruch 1,
**dadurch gekennzeichnet,**
**dass** das wärmeführende abgas überwiegend radial durch die Teil-Wendeln (10i, 10z, 10a) strömt.

3. Wärmetauscher nach Anspruch 1 oder 2,
**dadurch gekennzeichnet,**
**dass** die Teil-Wendeln (10i, 10z, 10a) radial einen Abstand zueinander aufweisen und
**dass** die Windungen (11i, 11z, 11a) der Teil-Wendeln (10i, 10z, 10a) im Abstand zueinander gewickelt oder durch Abstandselemente (16) auf Abstand gehalten sind.

4. Wärmetauscher nach einem der Ansprüche 1 bis 3,
**dadurch gekennzeichnet,**
**dass** die Teil-Wendeln (10i, 10z, 10a) als einstückige Wickeleinheit gewickelt sind, wobei die Wickelrichtung abwechselnd von unten nach oben und von oben nach unten gerichtet ist.

5. Wärmetauscher nach einem der Ansprüche 1 bis 4,
**dadurch gekennzeichnet,**
**dass** die Wickeleinheit mehrere zylindrische Teil-Wendeln (10i, 10z, 10a) mit unterschiedlichen Durchmessern umfasst.

6. Wärmetauscher nach einem der Ansprüche 1 bis 5,
**dadurch gekennzeichnet,**
**dass** die zu erwärmende Flüsigkeit der äußersten Teil-Wendel (10a) über einen Rücklaufeingang (12) von oben zuführbar ist und
**dass** die erwärmte Flüssigkeit an der innersten Teil-Wendel (10i) über einen Vorlaufausgang (13) unten abführbar ist, wobei die Anzahl der Teil-Wendeln (10i, 10z, 10a) ungerade ist.

7. Wärmetauscher nach einem der Ansprüche 1 bis 6,
**dadurch gekennzeichnet,**
**dass** er in einem Gehäuse (30) untergebracht ist, das die Teil-Wendeln (10i, 10z, 10a) allseitig umschließt,
**dass** im Innenraum (17) der innersten Teil-Wendel (10i) ein Brenner (20) angeordnet ist und
**dass** das Gehäuse (30) über und unter dem Brenner (20) wärmeisoliert ist (18, 19).

8. Wärmetauscher nach Anspruch 7,
**dadurch gekennzeichnet,**
**dass** das Gehäuse (30) über den äußersten Teil-Wendel (10a) mit einem ringförmigen Abgassammelraum (23) versehen ist.

9. Wärmetauscher nach Anspruch 7 oder 8,
**dadurch gekennzeichnet,**
**dass** das Gehäuse (30) unter der äußersten Teil-Wendel (10a) als ringförmige Kondensat-Auffangwanne (24) ausgebildet ist.

10. Wärmetauscher nach einem der Ansprüche 1 bis 10,
**dadurch gekennzeichnet,**
**dass** die Teil-Wendeln (10i, 10z, 10a) aus Rund- oder Ovalrohr aus wärmeleitendem Material gewickelt sind.

11. Wärmetauscher nach Anspruch 10,
**dadurch gekennzeichnet,**
**dass** das Rund- oder Ovalrohr selbst als Rippenrohr oder Wellrohr ausgebildet ist.

12. Wärmetauscher nach einem der Ansprüche 1 bis 9,
**dadurch gekennzeichnet,**
**dass** die Teil-Wendeln (10i, 10z, 10a) aus einem Rohr gewickelt sind, das mit Distanz-Noppen versehen ist.

13. Wärmetauscher nach Anspruch 12,
**dadurch gekennzeichnet,**
**dass** die Teil-Wendeln (10i, 10z, 10a) konisch gewickelt sind.

14. Wärmetauscher nach einem der Ansprüche 1 bis 13,
**dadurch gekennzeichnet,**
**dass** die Teil-Wendeln (10i, 10z, 10a) unterschiedliche Anzahl von Windungen aufweisen.

15. Wärmetauscher nach einem der Ansprüche 1 bis 14,
**dadurch gekennzeichnet,**
**dass** die Abstände der Windungen in den Teil-Wendeln (10i, 10z, 10a) unterschiedlich groß sind.

16. Wärmetauscher nach Anspruch 15,
**dadurch gekennzeichnet,**
**dass** die Abstände der Windungen einer Teil-Wendel (10i, 10z, 10a) unterschiedlich groß sind.

17. Wärmetauscher nach einem der Ansprüche 1 bis 14,
**dadurch gekennzeichnet,**
**dass** die Abstände zwischen den Windungen der Teil-Wendeln (10i, 10z, 10a) von der innersten Teil-Wendel (10a) zu der äußersten Teil-Wendel (10a) hin abnehmen.

18. Wärmetauscher nach einem der Ansprüche 1 bis 17,
**dadurch gekennzeichnet,**
**dass** die innerste Teil-Wendel (10i) aus Glattrohr und die äußeren Teil-Wendeln (10z, 10a) aus Rippenrohren gewickelt sind, wobei die Rippenzahl der verwendeten Rippenrohre in den Teil-Wendeln (10z, 10a) nach außen hin zunimmt.

19. Wärmetauscher nach einem der Ansprüche 1 bis 18,
**dadurch gekennzeichnet,**
**dass** der Durchmesser der Rohre in den Teil-Wendeln (10i 10z, 10a) unterschiedlich groß ist und vorzugsweise von innen nach außen abnimmt.

20. Wärmetauscher nach einem der Ansprüche 1 bis 19,
**dadurch gekennzeichnet,**
**dass** die Windungen der Teil-Wendeln (10i, 10z und 10a) in axialer Richtung vorzugsweise um die halbe Steigung der Teil-Wendeln gegeneinander versetzt sind.

21. Wärmetauscher nach einem der Ansprüche 1 bis 20,
**dadurch gekennzeichnet,**
**dass** das Gehäuse (30) ganz oder zum wesentlichen Teil aus Kunststoff besteht.
